# EUROPÄISCHE PATENTSCHRIFT

(11) **EP 3 535 506 B1**
(45) Veröffentlichungstag und Bekanntmachung des Hinweises auf die Patenterteilung: **24.02.2021**
(21) Anmeldenummer: 17800721.7
(22) Anmeldetag: 27.10.2017
(51) Int. Cl.: F16H 59/46, F16H 61/12, F16H 61/688

(54) **VERFAHREN ZUM BETREIBEN EINES MEHRKUPPLUNGSGETRIEBES, MEHRKUPPLUNGSGETRIEBE FÜR EIN KRAFTFAHRZEUG UND KRAFTFAHRZEUG MIT EINEM MEHRKUPPLUNGSGETRIEBE**
METHOD FOR OPERATING A MULTI-CLUTCH TRANSMISSION, MULTI-CLUTCH TRANSMISSION FOR A MOTOR VEHICLE, AND MOTOR VEHICLE HAVING A MULTI-CLUTCH TRANSMISSION
PROCÉDÉ PERMETTANT DE FAIRE FONCTIONNER UNE TRANSMISSION À EMBRAYAGES MULTIPLES, TRANSMISSION À EMBRAYAGES MULTIPLES POUR VÉHICULE AUTOMOBILE ET VÉHICULE AUTOMOBILE COMPRENANT UNE TRANSMISSION À EMBRAYAGES MULTIPLES

(30) Priorität: 04.11.2016 DE 102016221698
(43) Veröffentlichungstag der Anmeldung: 11.09.2019
(73) Patentinhaber: Audi AG, 85045 Ingolstadt (DE)
(72) Erfinder: GUNDLACH, Lutz, 85049 Ingolstadt (DE)
(86) Internationale Anmeldenummer: PCT/EP2017/077680
(87) Internationale Veröffentlichungsnummer: WO 2018/083046

(56) Entgegenhaltungen:
- EP-A1- 2 075 492
- EP-A1- 2 447 578
- WO-A1-2013/026436
- DE-B4-102007 051 064

## Beschreibung

Die Erfindung betrifft ein Verfahren zum Betreiben eines Mehrkupplungsgetriebes für ein Kraftfahrzeug. Das Mehrkupplungsgetriebe kann dabei eine Mehrzahl an Kupplungen, beispielsweise eine erste Kupplung und eine zweite Kupplung umfassen. Des Weiteren kann das Mehrkupplungsgetriebe eine Mehrzahl an Teilgetrieben, beispielsweise ein erstes Teilgetriebe und ein zweites Teilgetriebe umfassen. Das Mehrkupplungsgetriebe kann des Weiteren eine Mehrzahl an Teilgetriebegängen umfassen, welche auf die unterschiedlichen Teilgetriebe verteilt sein können. Mittels der ersten Kupplung kann beispielsweise eine Drehmomentübertragung zwischen einer Antriebsmaschine und dem ersten Teilgetriebe erfolgen und mittels der zweiten Kupplung kann eine Drehmomentübertragung zwischen der Antriebsmaschine und dem zweiten Teilgetriebe erfolgen. Weitere Aspekte der Erfindung betreffen ein Mehrkupplungsgetriebe für ein Kraftfahrzeug sowie ein Kraftfahrzeug mit einem derartigen Mehrkupplungsgetriebe.

Derartige Mehrkupplungsgetriebe sind im Kraftfahrzeugbereich weit verbreitet und ermöglichen ein nahezu zugkraftunterbrechungsfreies Schalten zwischen verschiedenen Getriebegängen.

Aus der DE 10 2007 051 064 B4 ist ein Fehlererkennungsverfahren für automatisierte Kraftfahrzeuggetriebe bekannt. Hierbei werden mittels zweier Kupplungen verschiedene Drehmomente auf jeweilige Zweige des Getriebes übertragen und anschließend festgestellt ob in beiden Zweigen ein Gang eingelegt ist. Sofern in beiden Zweigen ein Gang eingelegt ist und eine Summe der jeweiligen Drehmomente größer ist, als ein Referenzwert, so wird ein Fehlerzustand festgestellt. Bei dem Fehlerzustand kann es sich beispielsweise um einen Verspannungszustand eines Antriebsstranges handeln. Der Verspannungszustand tritt dann auf, wenn eine Kupplung eines Quellganges zu spät geöffnet und/oder eine Kupplung eines Zielganges zu früh eingelegt wird.

Aus der DE 10 2006 058 973 A1 ist ein Verfahren zum Steuern des Betriebes eines Parallelschaltgetriebes mit zwei Teilgetrieben bekannt, wobei eine geschlossene Kupplung des Parallelschaltgetriebes zunehmend geöffnet und gleichzeitig eine geöffnete Kupplung zunehmend geschlossen wird. Bei dem zunehmenden Schließen der geöffneten Kupplung wird dabei versucht, einen aktuellen Gang auszulegen, wobei bei Scheitern dieses Versuches das Schließen der geöffneten Kupplung beendet wird.

Ein Verfahren zur Steuerung und Regelung des Kupplungs- und Motordrehmoments während eines Schaltvorgangs eines Doppelkupplungsgetriebes ist aus der EP 1 439 087 A2 bekannt. Hierbei wird während eines gesamten Schaltvorgangs eine Kupplungsmomentensteuerung durchgeführt, während ein Motordrehmoment nur so lange gesteuert wird, wie eine Kupplung sicher geschlossen ist.

Aufgabe der vorliegenden Erfindung ist es, ein Verfahren, ein Mehrkupplungsgetriebe sowie ein Kraftfahrzeug der eingangs genannten Art zu schaffen, bei welchen ein zumindest weitgehend störungs- und zugkraftunterbrechungsfreies Gangschalten ermöglicht ist.

Diese Aufgabe wird durch ein Verfahren mit den Merkmalen des Patentanspruchs 1, durch ein Mehrkupplungsgetriebe mit den Merkmalen des Patentanspruchs 8 sowie durch ein Kraftfahrzeug gemäß Patentanspruch 10 gelöst. Vorteilhafte Weiterbildungen der Erfindung sind durch die Unteransprüche gegeben.

Das erfindungsgemäße Verfahren zum Betreiben eines Mehrkupplungsgetriebes für ein Kraftfahrzeug umfasst zumindest die folgenden Schritte:
a) Schließen einer ersten Kupplung des Mehrkupplungsgetriebes, um ein Eingangsdrehmoment zwischen einer Antriebsmaschine des Kraftfahrzeugs und zumindest einem ersten Teilgetriebe des Mehrkupplungsgetriebes zu übertragen; b) Beaufschlagen eines, mit dem ersten Teilgetriebe gekoppelten, zweiten Teilgetriebes des Mehrkupplungsgetriebes mit einem Schleppmoment durch eine zweite Kupplung des Mehrkupplungsgetriebes; c) Erfassen eines, von dem Schleppmoment abhängigen Kupplungsschlupfes der zweite Kupplung; und d) Ermitteln einer aktuellen Gangwahl des Mehrkupplungsgetriebes durch Bewerten des Kupplungsschlupfes.

Aufgrund der Möglichkeit, die aktuelle Gangwahl durch die Bewertung des Kupplungsschlupfes zu ermitteln, kann auch bei beispielsweise ausgefallenen (defekten) Wegsensoren ein zuverlässiges Ermitteln ob ein Teilgetriebegang eingelegt ist und welcher Teilgetriebegang eingelegt ist erfolgen. Mit anderen Worten kann auch bei einem Wegsensorausfall zuverlässig bestimmt werden, welcher Teilgetriebegang, beziehungsweise welche Teilgetriebegänge an den verschiedenen Teilgetrieben eingelegt sind. Während bei aus dem Stand der Technik bekannten Systemen ein Ausfall von Wegsensoren zu einem Liegenbleiben führen kann, insbesondere wenn ein, einem Rückwärtsgang an einem Teilgetriebe zugeordneter Wegsensor defekt ist, kann durch das erfindungsgemäße Verfahren eine vollständige Gangverfügbarkeit einzelner Teilgetriebegänge der jeweiligen Teilgetriebe aufrechterhalten werden. Somit ist auch bei einem etwaigen Ausfall derartiger Wegsensoren ein zumindest weitgehend Störung- und zugkraftunterbrechungsfreies Gangschalten ermöglicht.

Bei dem Mehrkupplungsgetriebe kann es sich beispielsweise um ein Doppelkupplungsgetriebe mit einer Mehrzahl an Gängen, einschließlich wenigstens eines Rückwärtsgang, handeln. Jeweilige Gänge des Mehrkupplungsgetriebes werden dabei im Folgenden auch als Teilgetriebegänge bezeichnet. Unter dem Begriff "Gang" beziehungsweise "Teilgetriebegang" ist im Folgenden eine Kopplung von Drehmomentübertragungsteilen zu verstehen, durch welche verschiedene Übersetzungsstufen realisiert sein können. Derartige Drehmomentübertragungsteile können beispielsweise Zahnräder sein, welche in deren gegenseitigem Eingriff eine Übersetzungsstufe und dabei einen Gang darstellen. Diese Gänge sind mittels sogenannte Gangsteller einrückbar, so dass beispielsweise ein Formschluss zwischen einem Zahnrad und einer Getriebewelle des Teilgetriebes hergestellt werden kann. Beim Einrücken der Gänge mittels derartiger Gangsteller können sogenannte Schiebemuffen eingesetzt werden, mittels welchen eine Gangstellerkraft zum Einrücken der Gänge ausübbar ist.

Unter dem Begriff "Schließen" der erste Kupplung kann insbesondere ein vollständiges Schließen der erste Kupplung zu verstehen sein. Durch das vollständige Schließen kann beispielsweise - je nach Ausführungsart der Kupplung - ein Aneinanderpressen jeweiliger Kupplungslamellen der ersten Kupplung unter Minimierung eines Kupplungsschlupfes an der ersten Kupplung zu verstehen sein. Durch eine derartige Minimierung des Kupplungsschlupfes an der erste Kupplung kann eine Drehmomentübertragung bei besonders hohem Wirkungsgrad erfolgen. Beim Betreiben des Mehrkupplungsgetriebes kann eine Übertragung des Eingangsdrehmoments zwischen der Antriebsmaschine und dem jeweiligen Teilgetriebe in des Mehrkupplungsgetriebes unter Vermittlung der jeweiligen Kupplungen erfolgen. Die Antriebsmaschine kann hierzu mit einer Eingangswelle des Mehrkupplungsgetriebes gekoppelt sein. An dieser Eingangswelle können auch die erste Kupplung und die zweite Kupplung aufgenommen sein. Die erste Kupplung kann dem ersten Teilgetriebe des Mehrkupplungsgetriebes zugeordnet sein. Das erste Teilgetriebe kann eine Mehrzahl an Gängen (Teilgetriebegänge) umfassen. Dabei kann das erste Teilgetriebe beispielsweise jeweilige Gänge mit ungerader Gangzahl, also beispielsweise die Gänge 1, 3, 5, 7 und gegebenenfalls weitere Gänge mit ungerader Gangzahl umfassen. Die zweite Kupplung kann dem zweiten Teilgetriebe des Mehrkupplungsgetriebes zugeordnet sein. Das zweite Teilgetriebe kann die restlichen Gänge des Mehrkupplungsgetriebes umfassen. So kann das zweite Teilgetriebe beispielsweise die Gänge (Teilgetriebegänge) mit beispielsweise gerader Gangzahl umfassen, also beispielsweise die Gänge 2, 4, 6 und gegebenenfalls weitere Gänge mit gerader Gangzahl. Dabei ist klar, dass auch beispielsweise das erste Teilgetriebe die geraden und das zweite Teilgetriebe die ungeraden Gänge umfassen kann. Des Weiteren kann eines der Teilgetriebe auch den Rückwärtsgang umfassen. Der Rückwärtsgang kann also beispielsweise dem zweiten Teilgetriebe zugeordnet sein. Prinzipiell können auch mehrere Rückwärtsgänge vorgesehen sein, sodass beispielsweise ein erster Rückwärtsgang dem einen Teilgetriebe und ein zweiter Rückwärtsgang dem anderen Teilgetriebe zugeordnet sein kann.

Das erste Teilgetriebe und das zweite Teilgetriebe können beispielsweise über ein Zahnrad auf einer Getriebeausgangswelle miteinander gekoppelt sein. Beim Betrieb des Mehrkupplungsgetriebes kann - in Abhängigkeit von einer vorliegenden, aktuellen Übersetzung - ein Antreiben der Getriebeausgangswelle durch Zuschalten eines der beiden Teilgetriebe erfolgen, indem die jeweilige Kupplung geschlossen wird. Das Beaufschlagen mit dem Schleppmoment kann dadurch erfolgen, dass das Schleppmoment von der zweiten Kupplung auf das zweite Teilgetriebe, von dort auf die Getriebeausgangswelle und über die Getriebeausgangswelle an das erste Teilgetriebe übertragen werden kann. Das Schleppmoment kann dadurch dem Antriebsmoment entgegenwirken. Das Beaufschlagen mit dem Schleppmoment kann erfolgen, während die erste Kupplung vollständig geschlossen ist. Dadurch kann eine, in vorteilhafter Weise, ungestörte Drehmomentübertragung unter Vermittlung der ersten Kupplung erfolgen. Bei dieser "ungestörten Drehmomentübertragung" kann ein Drehmomenteinbruch oder sogar eine Zugkraftunterbrechung zumindest weitgehend unterbunden werden, zu welchen es beispielsweise bei einer nur teilweise eingerückten und damit in einem Schlupfbetrieb eingestellten Kupplung kommen könnte.

Bei dem Ermitteln der aktuellen Gangwahl des Mehrkupplungsgetriebes durch Bewerten des Kupplungsschlupfes kann festgestellt werden, ob insgesamt mehrere Gänge (jeweils ein Teilgetriebegang in jeweils einem der Teilgetriebe) eingelegt sind, oder nicht. Dies kann auch bei Stillstand des Kraftfahrzeugs erfolgen. Im Stillstand kann die Getriebeausgangswelle beispielsweise durch eine elektronische Parkbremse oder durch eine andere Bremse blockiert sein. Mit anderen Worten kann die Gangwahl also auch im Stillstand des Kraftfahrzeugs ermittelt werden. Dadurch kann auch bei ausgefallenen Wegsensoren beispielsweise ein Anfahren aus dem Stand bei einem vorbestimmten, eingelegten Gang erfolgen. So kann auch bei defektem Wegsensor ein Anfahren in einem zweiten oder dritten Teilgetriebegang bei glatter Fahrbahnoberfläche (beispielsweise bei Glatteis) erfolgen und somit in vorteilhafter Weise ein Durchdrehen von Antriebsrädern unterbunden werden. Das Bewerten des Kupplungsschlupfes kann beispielsweise durch Vergleich des Kupplungsschlupfes mit einem vorbestimmten, gangabhängigen und zusätzlich oder alternativ drehzahlabhängigen Kupplungsschlupfwert erfolgen. Der Kupplungsschlupfwert kann Bestandteil eines Schlupfwertkennfelds sein und kann beispielsweise in einem Speicher einer Steuereinrichtung des Mehrkupplungsgetriebes hinterlegt und damit gespeichert sein.

Zusammenfassend besteht ein besonderer Vorteil des erfindungsgemäßen Verfahrens darin, dass eine wegsensorfreie Ermittlung der aktuellen Gangwahl ermöglicht ist. Somit kann auch bei defekten Wegsensoren anhand des Kupplungsschlupfes auf die Gangwahl rückgeschlossen werden. Dies ermöglicht einen besonders ausfallsicheren Betrieb des Mehrkupplungsgetriebes, wobei die Gefahr eines Liegenbleibens insgesamt deutlich verringert werden kann. Insbesondere kann eine Gangverfügbarkeit auch bei ausgefallenen Wegsensoren in dem Mehrkupplungsgetriebe sichergestellt werden.

In einer vorteilhaften Ausgestaltung der Erfindung wird das Schleppmoment beim Beaufschlagen des zweiten Teilgetriebes in Schritt b) konstant gehalten. Somit wird das Schleppmoment bei einem konstanten Schleppmomentenwert gehalten. Dies ist von Vorteil, da durch ein derartiges Konstanthalten etwaige Störeinflüsse, wie beispielsweise Drehbeschleunigungen oder Drehverzögerungen von Getriebewellen des Mehrkupplungsgetriebes, welche ein Ermitteln der aktuellen Gangwahl erschweren oder zumindest verzögern würden, wirksam unterbunden werden können. Das Konstanthalten des Schleppmoments ermöglicht also zumindest kupplungsseitig eine Verringerung etwaiger Störeinflüsse bei einer nachfolgenden Ermittlung der aktuellen Gangwahl des Mehrkupplungsgetriebes.

In einer weiteren vorteilhaften Ausgestaltung der Erfindung ist das Schleppmoment größer, als ein, einen Greifpunkt der zweiten Kupplung charakterisierendes Grenzmoment. Dies ist von Vorteil, da durch ein Einstellen des Schleppmoments auf einen Schleppmomentenwert, welcher größer ist als das Grenzmoment, von einer zuverlässigen Drehmomentübertragung des Schleppmoments durch die zweite Kupplung ausgegangen werden kann. Dadurch kann ein besonders zuverlässiges Ermitteln der Gangwahl sichergestellt werden. Der Greifpunkt und damit das den Greifpunkt charakterisierende Grenzmoment kann je nach Bauart der Kupplung verschieden groß sein. Das Grenzmoment kann somit beispielsweise zwischen 5 Nm bis 10 Nm liegen. Vorteilhafterweise ist ein Betrag des Schleppmoment maximal um 2 Nm bis 5 Nm größer als ein Betrag des Grenzmoments. Dadurch kann einerseits das Grenzmoment in einem, für ein zuverlässiges Ermitteln der Gangwahl, ausreichenden Maße überschritten werden und andererseits stellt sich bei derartigen Beträgen ein Kupplungsschlupf bereits unter geringem Leistungsaufwand der Antriebsmaschine ein.

In einer weiteren vorteilhaften Ausgestaltung der Erfindung wird in Schritt d) bei dem Ermitteln der aktuellen Gangwahl durch Bewerten des Kupplungsschlupfes ermittelt, ob in dem ersten Teilgetriebe und in dem zweiten Teilgetriebe jeweils ein Teilgetriebegang eingelegt ist. Dies ist von Vorteil, da hierdurch ermittelt werden kann, ob und in welcher Weise der Teilgetriebegang eingelegt ist. Hierdurch kann beispielsweise bewertet werden, ob der Teilgetriebegang in formschlüssiger Weise eingelegt ist. Mit anderen Worten kann dadurch ermittelt werden, ob ein betriebssicheres, formschlüssiges Einlegen des Teilgetriebegangs vorliegt. Von einem formschlüssigen Einlegen des jeweiligen Ganges ist auszugehen, wenn eine zu dem Gang zugehörige Wellendrehzahl einer zugehörigen Synchrondrehzahl entspricht. Die Wellendrehzahl weicht nicht von der jeweiligen Synchrondrehzahl ab, wenn der Gang formschlüssig eingelegt ist. Zusammenfassend kann also in Schritt d) ermittelt werden, ob ein Teilgetriebegang in dem ersten Teilgetriebe und ein anderer Teilgetriebegang in dem zweiten Teilgetriebe eingelegt ist. So kann beispielsweise in dem ersten Teilgetriebe der dritte Gang als Teilgetriebegang eingelegt sein und in dem zweiten Teilgetriebe der vierte Gang als der andere Teilgetriebegang, um nur ein Beispiel zu nennen.

In einer weiteren vorteilhaften Ausgestaltung der Erfindung erfolgt ein Identifizieren zumindest eines, in dem ersten Teilgetriebe oder in dem zweiten Teilgetriebe eingelegten Teilgetriebegangs durch Heranziehen einer, den Teilgetriebegang charakterisierenden Synchrondrehzahl, wenn der zu identifizierende Teilgetriebegang eingelegt ist. Hierbei wird also davon ausgegangen, dass in jedem der Teilgetriebe jeweils ein Teilgetriebegang eingelegt ist. Allgemein kann beispielsweise durch Schließen der ersten Kupplung das erste Teilgetriebe "aktiv" geschaltet werden und dementsprechend eine Drehmomentübertragung von der (durch die Antriebsmaschine angetriebenen) Eingangswelle über die erste Kupplung und den entsprechenden, eingelegten und aktiven Teilgetriebegang des ersten Teilgetriebes zur Abtriebswelle des Mehrkupplungsgetriebes erfolgen. Bei bekannter Übersetzung des gerade eingelegten Teilgetriebegang des "aktiven" Teilgetriebes (in diesem Beispiel das erste Teilgetriebe) kann über einen Drehzahlsensor, welcher die Drehzahl der Eingangswelle erfassen kann, ermittelt werden, ob und welcher Gang auf dem aktiven, ersten Teilgetriebe eingelegt ist. Um sicherzustellen, dass nicht zufällig die Eingangswelle mit einer theoretisch möglichen Gangübersetzung synchron dreht, kann mithilfe der zweiten Kupplung des zweiten Teilgetriebes das Schleppmoment aufgebracht werden. Ein derartiges "zufälliges" Mitdrehen kann beispielsweise durch Lagerreibungseffekte oder durch eine aktivierte Kupplungskühlung (Überströmen der Kupplung mit Öl zum Kühlen derselben und dadurch Herbeiführen von Drehbewegungen), herbeigeführt werden. Bei diesem "zufälligen" Mitdrehen kann mit anderen Worten ein zufälliges, undefiniertes Mitschleppen bei einer Drehzahl zwischen "0" und einer Antriebsdrehzahl der Antriebsmaschine erfolgen, welche jedoch auch theoretisch und "zufällig" einer Synchrondrehzahl entsprechen könnte. Das Schleppmoment kann unter Vermittlung des zweiten Teilgetriebes, der Abtriebswelle, des ersten Teilgetriebes und der ersten Kupplung bis zu der Eingangswelle geführt werden. Ändert sich nun die Drehzahl der Eingangswelle nicht infolge des Schleppmoments, so ist dies ein Indiz dafür, dass auf dem zweiten Teilgetriebe ein zu identifizierender Teilgetriebegang eingelegt ist. Ein eingelegter Gang verhindert nämlich ein Abbremsen oder Beschleunigen des zweiten Teilgetriebes, auch wenn an diesem das Schleppmoment angelegt ist. Der als eingelegt erkannte Teilgetriebegang des zweiten Teilgetriebes kann anschließend gezielt über die jeweiligen Gangsteller ungeregelt ausgelegt werden.

Ein ausgelegter Gang (im hier beschriebenen Beispiel: des zweiten Teilgetriebes) kann sicher erkannt werden, wenn sich der Kupplungsschlupf an der zweiten Kupplung bei dem (konstant eingestellten) Schleppmoment verringert. Das Schleppmoment führt nämlich bei ausgelegtem Gang zu einem Abbremsen oder Beschleunigen des zweiten Teilgetriebes. Um einen gewünschten Zielgang (beispielsweise ein anderer Teilgetriebegang des zweiten Teilgetriebes) über jeweilige Gangsteller ungeregelt einzulegen, kann das Schleppmoment an der zweiten Kupplung zurückgenommen und beispielsweise auf den Wert "0" gestellt werden. Mit anderen Worten kann die zweite Kupplung unter Aufhebung des Schleppmoments vollständig geöffnet werden, sobald der als eingelegt erkannte Gang des zweiten Teilgetriebes ausgelegt wurde.

Unter dem Begriff "Identifizieren" ist allgemein ein Zuordnen einer Gangnummer zu dem jeweiligen, zu identifizierende Teilgetriebegang zu verstehen. Bei dem Identifizieren kann der jeweils eingelegte Gang beispielsweise als zweiter Gang oder als vierter Gang identifiziert werden, um nur einige Beispiele zu nennen. Das "Identifizieren" kann beispielsweise durch Auswertung der mittels des Drehzahlsensors ermittelten Eingangswellendrehzahl und Heranziehen der bekannten Übersetzung der einzelnen Gänge des Mehrkupplungsgetriebes erfolgen. Zusammenfassend kann also eine sich bei dem Betrieb des Mehrkupplungsgetriebes mit eingelegtem Teilgetriebegang einstellende Eingangswellendrehzahl beispielsweise durch den Drehzahlsensor an der Eingangswelle gemessen werden und die Drehzahl der Eingangswelle schließlich mit einer, für den Teilgetriebegang charakterisierenden Teilgetriebegangübersetzung verrechnet werden. Ein sich hieraus ergebender Wert kann mit der, beispielsweise in einer Steuereinrichtung (welche als Getriebesteuergerät ausgebildet sein kann) abgespeicherten Synchrondrehzahl des jeweiligen Teilgetriebegangs verglichen werden, um den Teilgetriebegang zu identifizieren.

In einer weiteren vorteilhaften Ausgestaltung der Erfindung erfolgt in einem weiteren Schritt e) eine Änderung der aktuellen Gangwahl in Abhängigkeit von dem Identifizieren des eingelegten Teilgetriebegangs, durch Einlegen eines, von dem eingelegten Teilgetriebegang verschiedenen, Teilgetriebeganges. Insbesondere kann dabei ein Einlegen eines Ganges des jeweils anderen, "passiven" Teilgetriebes erfolgen um etwaige Gangsprünge zu vermeiden und dadurch einen Betrieb bei hohem Getriebewirkungsgrad zu erzielen. Unter einem "passiven" Teilgetriebe ist zu verstehen, dass dieses Teilgetriebe bei der Drehmomentübertragung von der Eingangswelle über das gerade "aktive" Teilgetriebe bis hin zur Abtriebswelle momentan "inaktiv" ist und dementsprechend die Drehmomentübertragung nicht, oder nur beispielsweise in Form eines "Mitdrehens" der Wellen (beispielsweise aufgrund von Lagerreibung) des passiven Teilgetriebes beeinflusst.

Wurde beispielsweise der erste Gang, welcher sich beispielsweise auf dem ersten Teilgetriebe befinden kann, als aktuell eingelegter Gang identifiziert, so kann durch Einlegen des beispielsweise zweiten Gangs des zweiten Teilgetriebes, als von dem eingelegten Teilgetriebegang verschiedenen Teilgetriebeganges ein derartiger Gangsprung vermieden werden. Zu einem derartigen, ungünstigen Gangsprung kann es beispielsweise bei einem etwaigen Schalten von einem zweiten in einen vierten Gang also beispielsweise beim Überspringen des dritten Ganges kommen, was bei aus dem Stand der Technik bekannten Systemen erfolgt, wenn ein Wegsensor ausgefallen ist.

In einer weiteren vorteilhaften Ausgestaltung der Erfindung wird das Verfahren bei einer, gegen eine Drehbewegung blockierten Abtriebswelle des Mehrkupplungsgetriebes durchgeführt. Mit anderen Worten kann das Verfahren auch beispielsweise bei stillstehendem Kraftfahrzeug durchgeführt werden, wobei die Abtriebswelle beispielsweise durch eine elektronische Parkbremse oder durch eine andere Fahrzeugbremse gegenüber der Drehbewegung blockiert sein kann. Dadurch kann in vorteilhafter Weise auch bei defekten Wegsensoren und stehendem Kraftfahrzeug eine zuverlässige Ermittlung der aktuellen Gangwahl erfolgen.

Ein zweiter Aspekt der Erfindung betrifft ein Mehrkupplungsgetriebe für ein Kraftfahrzeug, mit einem ersten Teilgetriebe, mit einer ersten Kupplung, welche schließbar ist, um ein Eingangsdrehmoment zwischen einer Antriebsmaschine des Kraftfahrzeugs und zumindest dem ersten Teilgetriebe des Mehrkupplungsgetriebes zu übertragen, mit einem zweiten Teilgetriebe, welches mit dem ersten Teilgetriebe gekoppelt ist, und mit einer zweiten Kupplung, zum Übertragen des Eingangsdrehmoments zwischen der Antriebsmaschine und dem zweiten Teilgetriebe. Gemäß der Erfindung ist eine Steuereinrichtung vorgesehen, welche dazu ausgebildet ist, zumindest die zweite Kupplung anzusteuern, um mittels der zweiten Kupplung zumindest das zweite Teilgetriebe mit einem Schleppmoment zu beaufschlagen, während die erste Kupplung geschlossen ist, wobei mittels der Steuereinrichtung ein, von dem Schleppmoment abhängiger Kupplungsschlupf der zweiten Kupplung erfassbar und eine aktuelle Gangwahl des Mehrkupplungsgetriebes durch Bewerten des Kupplungsschlupfes ermittelbar ist. Die Steuereinrichtung kann dabei die erste Kupplung derart ansteuern, dass diese vollständig geschlossen ist und die zweite Kupplung derart ansteuern, dass diese, während die erste Kupplung geschlossen ist, das Schleppmoment ausübt. Dadurch ist in vorteilhafter Weise eine wegsensorfreie Ermittlung der aktuellen Gangwahl möglich. Somit ist auch bei defekten (ausgefallenen) Wegsensoren ein zumindest weitgehend störung- und zugkraftunterbrechungsfreies Gangschalten ermöglicht. Die Steuereinrichtung kann dazu ausgebildet sein, die zweite Kupplung derart ansteuern, dass die zweite Kupplung das Schleppmoment konstant hält. Dies ermöglicht eine besonders störungsfreie Bewertung des Kupplungsschlupfes.

In einer vorteilhaften Ausgestaltung der Erfindung ist das Mehrkupplungsgetriebe ein Doppelkupplungsgetriebe. Durch ein derartiges Doppelkupplungsgetriebe kann ein zumindest weitgehend zugkraftunterbrechungsfreies Schalten in verschiedene Gänge des Mehrkupplungsgetriebes erfolgen.

Ein dritter Aspekt der Erfindung betrifft ein Kraftfahrzeug mit einem derartigen Mehrkupplungsgetriebe. Bei einem derartigen Kraftfahrzeug ist ebenfalls ein zumindest weitgehend störungs- und zugkraftunterbrechungsfreies Schalten in verschiedene Gänge des Mehrkupplungsgetriebes ermöglicht.

Vorteilhafte Ausgestaltungen und bevorzugte Ausführungsformen des Verfahrens sind auch als vorteilhafte Ausgestaltungen und bevorzugte Ausführungsformen des erfindungsgemäßen Mehrkupplungsgetriebes sowie des erfindungsgemäßen Kraftfahrzeugs anzusehen und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: einen Teilschnitt eines für die Erfindung beispielhaften Mehrkupplungsgetriebes, welches als in einem kraftfahrzeugeingebautes Doppelkupplungsgetriebe ausgebildet ist;
- Fig. 2a-2d: jeweilige Diagramme, bei welchen eine Wellendrehzahl über der Zeit, eine Gangposition über der Zeit, ein Kupplungsmoment über der Zeit sowie eine Gangstellerkraft über der Zeit beim Betrieb des Mehrkupplungsgetriebes im fahrenden Kraftfahrzeug dargestellt ist;
- Fig. 3a-3d: jeweilige Diagramme, bei welchen eine Wellendrehzahl über der Zeit, eine Gangposition über der Zeit, ein Kupplungsmoment über der Zeit sowie eine Gangstellerkraft über der Zeit beim Betrieb des Mehrkupplungsgetriebes im stillstehenden Kraftfahrzeug dargestellt ist;
- Fig. 4: ein für das erfindungsgemäße Verfahren beispielhaftes Ablaufdiagramm, welches einzelne Verfahrensschritte zeigt.

Bei aus dem Stand der Technik bekannten Direktschaltgetrieben (Doppelkupplungsgetrieben) werden häufig Gangpositionen bei Ein- und Auslegevorgängen von Gängen sowie Steuerungs- und Regelvorgänge beim Gangschalten mittels geeigneter Sensoren, beispielsweise mittels Wegsensoren überwacht. Im Falle eines Sensorfehlers ist es üblich, ein betroffenes Teilgetriebe, welchem der defekte Sensor zugeordnet ist, zu sperren, indem eine diesem Teilgetriebe zugeordnete Kupplung nicht mehr angesteuert wird und damit in einer Offenstellung bleibt und die jeweiligen Gänge dieses Teilgetriebes - wenn möglich - in eine Neutralposition gebracht, also ausgerückt werden. Ein Grund für diese Sperrung des (von dem Defekt) betroffenen Teilgetriebes ist, dass bei bisher aus dem Stand der Technik bekannten Systemen nicht erkannt werden kann, ob auf dem Teilgetriebe mit dem fehlerhaften Sensor mehr als ein Gang eingelegt wird. Im Falle von mehr als einem eingelegten Gang je Teilgetriebe besteht jedoch die große Gefahr, dass sich das Mehrkupplungsgetriebe selbst über eine Verzahnung der miteinander in Eingriff stehenden Zahnräder blockiert.

Bei bisher bekannten Systemen sind somit keine Gänge des betroffenen Teilgetriebes (mit dem wenigstens einen defekten Sensor) für den Kunden nutzbar. Ist auf dem betroffenen Teilgetriebe ein Rückwärtsgang angeordnet, so steht dieser nicht mehr zur Verfügung, was aus Kundensicht häufig zu einem Liegenbleiben des Kraftfahrzeugs führen kann.

Durch die vorliegende Erfindung kann auch bei defekten Wegsensoren mittels gezielter Steuerung von Kupplungen und Gangstellern erkannt werden, ob auf dem von dem Defekt betroffenen Teilgetriebe ein Gang eingelegt ist, oder nicht. Dadurch kann trotz eines derartigen Defekts (Wegsensorausfalls) eine Gangverfügbarkeit zumindest weitgehend oder sogar vollständig aufrecht erhalten und somit etwaige Gangsprünge vermieden werden.

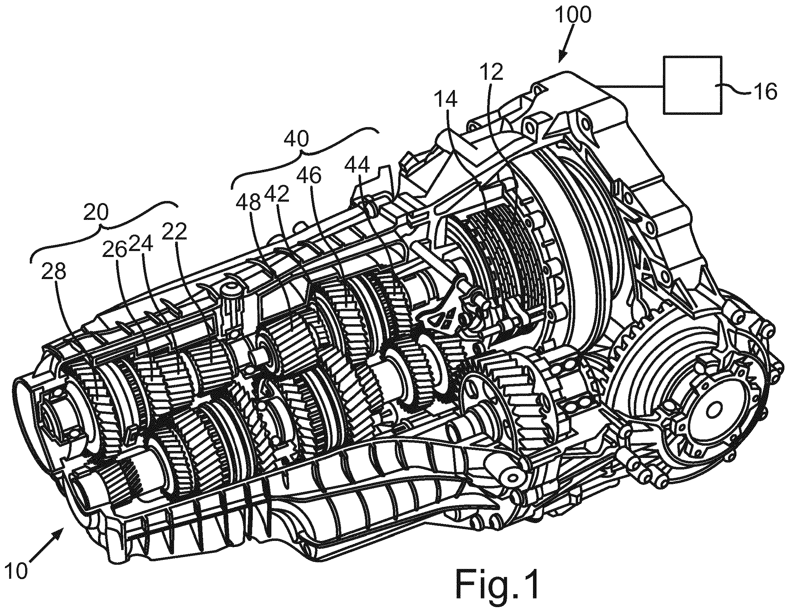

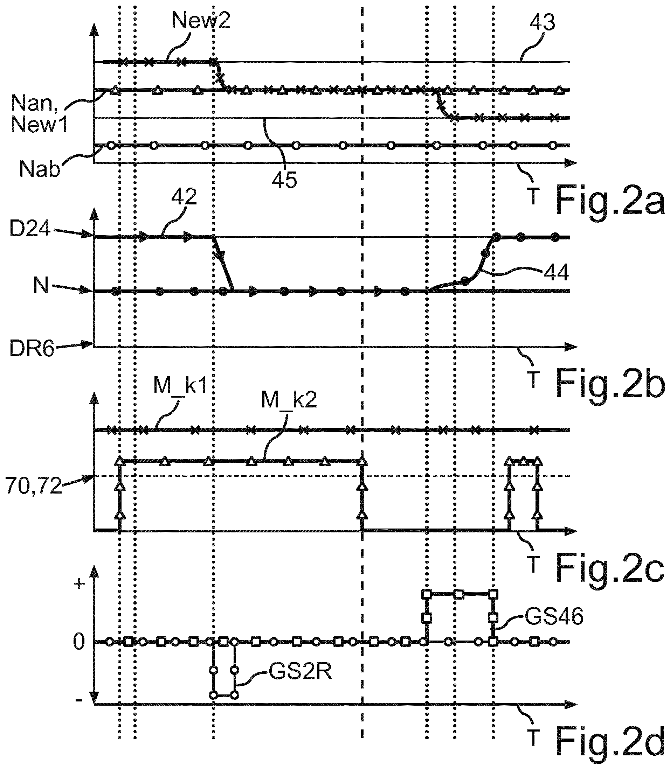

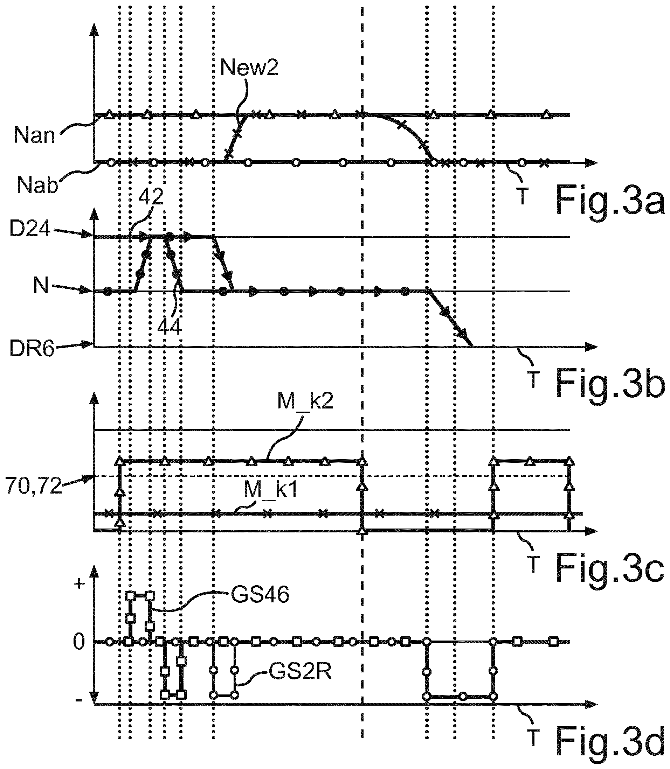

Fig.1 zeigt eine Schnittdarstellung eines als Doppelkupplungsgetriebe ausgebildeten Mehrkupplungsgetriebes 10, welches in einem Kraftfahrzeug 100 angeordnet ist. Das Mehrkupplungsgetriebe 10 umfasst ein erstes Teilgetriebe 20 mit einem ersten Gang 22, einem dritten Gang 24, einem fünften Gang 26 und einem siebten Gang 28. Des Weiteren umfasst das Mehrkupplungsgetriebe 10 ein zweites Teilgetriebe 40 mit einem zweiten Gang 42, einem vierten Gang 44, einem sechsten Gang 46 sowie einem Rückwärtsgang 48. Um ein Eingangsdrehmoment M_k1 (siehe Fig. 2c und Fig. 3c) zwischen einer hier nicht weiter dargestellten Antriebsmaschine des Kraftfahrzeugs 100 und einer hier ebenfalls nicht weiter dargestellten Abtriebswelle des Mehrkupplungsgetriebes 10 zum Antreiben des Kraftfahrzeugs 100 zu übertragen, kann das erste Teilgetriebe 20 durch eine erste Kupplung 12 und das zweite Teilgetriebe 40 durch eine zweite Kupplung 14 des Mehrkupplungsgetriebes drehmomentübertragend mit einer Antriebswelle, welche mit der Antriebsmaschine verbunden sein kann, gekoppelt werden. Die Antriebswelle kann dabei beispielsweise als Getriebeeingangswelle ausgebildet sein. Unter Vermittlung der ersten Kupplung 12 beziehungsweise der zweiten Kupplung 14 ist die Getriebeeingangswelle drehmomentübertragend über das erste Teilgetriebe 20 beziehungsweise über das zweite Teilgetriebe 40 mit der Abtriebswelle koppelbar. Zudem ist eine Steuereinrichtung 16 vorgesehen, welche im vorliegenden Ausführungsbeispiel als Getriebesteuergerät ausgebildet ist. Die Steuereinrichtung 16 ist dazu ausgebildet, zumindest die zweite Kupplung 14 anzusteuern, sodass die zweite Kupplung 14 ein Schleppmoment M_k2 zumindest auf das zweite Teilgetriebe 40 ausübt, während die erste Kupplung 12 geschlossen ist. Mittels der Steuereinrichtung 16 ist ein, von dem Schleppmoment M_k2 abhängiger Kupplungsschlupf der zweiten Kupplung 14 erfassbar und eine aktuelle Gangwahl des Mehrkupplungsgetriebes 10 durch Bewerten des Kupplungsschlupfes ermittelbar.

Die Fig. 2a bis 2d die zeigen jeweils Diagramme, welche einen Betrieb des Mehrkupplungsgetriebes 10 bei fahrendem Kraftfahrzeug 100 verdeutlichen. Die Fig. 3a bis 3b zeigen hingegen jeweilige Diagramme, welche den Betrieb des Mehrkupplungsgetriebes 10 bei stillstehendem Kraftfahrzeug 100 verdeutlichen.

Fig. 2a und Fig. 3a zeigen jeweils Diagramme, bei welchem jeweilige Wellendrehzahlen über einer Zeit T aufgetragen sind. In diesen Diagrammen ist eine Antriebsdrehzahl Nan aufgetragen, wobei die Antriebsdrehzahl Nan durch eine mit dem Mehrkupplungsgetriebe 10 gekoppelte Antriebsmaschine des Kraftfahrzeugs 100 vorgegeben ist. Bei der Antriebsmaschine kann es sich beispielsweise um eine Verbrennungskraftmaschine oder um einen Elektromotor handeln, um nur einige Beispiele zu nennen.

Da Fig. 2a den fahrenden Betrieb des Kraftfahrzeugs 100 darstellt, kann die Antriebsdrehzahl Nan - wie im vorliegenden Ausführungsbeispiel gezeigt - einer Drehzahl New1 an der Eingangswelle bei - zum Antreiben des Kraftfahrzeugs 100 - aktiviertem, also mittels der ersten Kupplung 12 zugeschaltetem, ersten Teilgetriebe 20, entsprechen. Anhand von Fig. 2a ist beispielhaft dargestellt, wie ein Schaltvorgang von dem zweiten Gang 42 in den vierten Gang 44 des zweiten Teilgetriebes 40 erfolgt. Ausgehend von einer Synchrondrehzahl 43 des zweiten Gangs 42 erfolgt zunächst eine Drehzahlangleichung einer Drehzahl New2 des zweiten Teilgetriebes 40 an die Antriebsdrehzahl Nan und schließlich ein Angleichen der Drehzahl New2 an eine Synchrondrehzahl 45 des vierten Gangs 44. Die Synchrondrehzahlen können hierbei auch als Synchronisierungsdrehzahlen bezeichnet werden. In den Fig. 2a und Fig. 3a ist zudem eine Abtriebsdrehzahl Nab der Abtriebswelle des Mehrkupplungsgetriebes 10 aufgetragen.

Die Fig. 2b und Fig. 3b zeigen jeweils Gangpositionen über der Zeit T. Hierbei erfolgt ein Schalten des zweiten Gangs 42 ausgehend von einer Einrückstellung D24 des zweiten Gangs 42 beziehungsweise des vierten Gangs 44 in eine Neutralstellung N. Zudem erfolgt ein Schalten des vierten Gangs 44 von der Neutralstellung N in die Einrückstellung D24. Des Weiteren ist eine Einrückstellung DR6 des Rückwärtsgangs 48 beziehungsweise des sechsten Ganges 46 dargestellt.

Die Fig. 2c und Fig. 3c zeigen jeweils Kupplungsmomente über der Zeit T. Dabei wird in den Fig. 2c und Fig. 3c jeweils das Eingangsdrehmoment M_k1 durch Schließen der ersten Kupplung 12 in das Mehrkupplungsgetriebe 10 eingeleitet. Durch die zweite Kupplung 14 erfolgt ein Beaufschlagen mit dem Schleppmoment M_k2, wobei ein Schleppmomentenwert des Schleppmoment M_k2 auf einen konstanten Wert oberhalb eines Greifpunkts 70 der zweiten Kupplung 14 eingestellt wird. Dem Greifpunkt 70 ist vorliegend ein diesen charakterisierendes Grenzmoment 72 zugeordnet. Bei Überschreiten des Grenzmoments 72 kann von einer sicheren Drehmomentübertragung durch die zweite Kupplung 14 ausgegangen werden.

Fig. 2d und Fig. 3d zeigen jeweils eine Gangstellerkraft sowie eine Gangstellerrichtung in Abhängigkeit von der Zeit T. Hierbei kann eine Schiebemuffenkraft GS2R eines Gangstellers zum Einrücken des zweiten Gangs 22 beziehungsweise des Rückwärtsgangs 48 aufgewendet werden. Des Weiteren kann eine andere Schiebemuffenkraft GS46 eines anderen Gangstellers zum Einrücken des vierten Gangs 44 beziehungsweise des sechsten Gangs 46 aufgewendet werden.

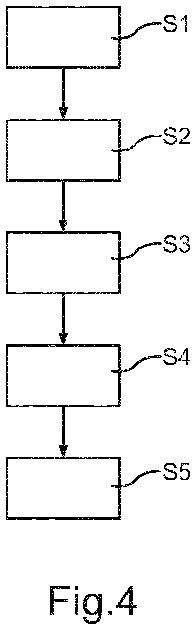

Fig. 4 zeigt beispielhaft drei Schritte des erfindungsgemäßen Verfahrens, wobei in Schritt S1 ein Schließen der ersten Kupplung 12 des Mehrkupplungsgetriebes 10 erfolgt, um das Eingangsdrehmoment M_k1 zwischen der Antriebsmaschine des Kraftfahrzeugs 100 und dem ersten Teilgetriebe 20 des Mehrkupplungsgetriebes 10 zu übertragen.

In Schritt S2 erfolgt ein Beaufschlagen des mit dem ersten Teilgetriebe 20 unter Vermittlung der Abtriebswelle gekoppelten, zweiten Teilgetriebes 40 des Mehrkupplungsgetriebes 10 mit dem Schleppmoment M_k2 durch die zweite Kupplung 14 des Mehrkupplungsgetriebes 10. Das Schleppmoment M_k2 wird beim Beaufschlagen des zweiten Teilgetriebes 40 konstant gehalten. Des Weiteren ist das Schleppmoment M_k2 größer, als das den Greifpunkt 70, der zweite Kupplung 14 charakterisierende Grenzmoment 72.

In Schritt S3 erfolgt ein Erfassen des, von dem Schleppmoment M_k2 abhängigen Kupplungsschlupfes der zweiten Kupplung 14 und in Schritt S4 das Ermitteln einer aktuellen Gangwahl des Mehrkupplungsgetriebes 10 durch Bewerten des Kupplungsschlupfes.

Bei dem Ermitteln der aktuellen Gangwahl durch das Bewerten des Kupplungsschlupfes wird ermittelt, ob in dem ersten Teilgetriebe 12 und in dem zweiten Teilgetriebe 14 jeweils ein Teilgetriebegang 22, 24, 26, 28, 42, 44, 46, 48 eingelegt ist. Zudem erfolgt ein Identifizieren des, in dem ersten Teilgetriebe 12 oder in dem zweiten Teilgetriebe 14 eingelegten Teilgetriebegangs 22, 24, 26, 28, 42, 44, 46, 48 durch Heranziehen der jeweiligen, den Teilgetriebegang 22, 24, 26, 28, 42, 44, 46, 48 charakterisierenden Synchrondrehzahl. In Fig. 2a ist aus Gründen der Übersichtlichkeit zwar lediglich die Synchrondrehzahl 43 des zweiten Gangs 42 sowie die Synchrondrehzahl 45 des vierten Gangs 44 dargestellt, es ist jedoch klar, dass jedem Teilgetriebegang 22, 24, 26, 28, 42, 44, 46, 48 eine jeweilige Synchrondrehzahl zugeordnet sein kann, wenngleich dies nicht explizit dargestellt ist.

In einem weiteren Schritt S5 erfolgt eine Änderung der aktuellen Gangwahl in Abhängigkeit von dem Identifizieren des eingelegten Teilgetriebegangs 22, 24, 26, 28, 42, 44, 46, 48 durch Einlegen eines, von dem eingelegten Teilgetriebegang 22, 24, 26, 28, 42, 44, 46, 48 verschiedenen Teilgetriebeganges 22, 24, 26, 28, 42, 44, 46, 48.

Zusammenfassend soll nochmals eine Erkennung des jeweils eingelegten Ganges 22, 24, 26, 28, 42, 44, 46, 48 im Fahrbetrieb (siehe Fig. 2a bis 2d) beschrieben werden. Im Fahrbetrieb kann über den Drehzahlsensor auf der Eingangswelle mit bekannter Übersetzung des Mehrkupplungsgetriebes 10 erkannt werden, ob und welcher Gang 22, 24, 26, 28, 42, 44, 46, 48 auf dem jeweiligen Teilgetriebe 20, 40 eingelegt ist. Um sicher zu gehen, dass nicht zufällig die Eingangswelle mit einer möglichen Gangübersetzung synchron dreht, kann mithilfe der passiven Fahrkupplung (hier: zweite Kupplung 14) des beispielsweise von einem Wegsensordefekt betroffenen Teilgetriebes (hier: zweites Teilgetriebe 40) das Schleppmoment M_k2 auf die Eingangswelle gestellt werden. Wenn sich die Drehzahl hierbei nicht ändert ist ein Gang auf dem betroffenen Teilgetriebe eingelegt. Ein damit als eingelegt erkannter Gang kann dann gezielt über jeweilige Gangsteller ungeregelt ausgelegt werden.

Ein ausgelegter Gang kann dann sicher erkannt werden, wenn sich der Kupplungsschlupf an der passiven Kupplung (hier: zweite Kupplung 14) bei weiterhin konstantem Schleppmoment M_k2 deutlich verringert. Das Schleppmoment M_k2 an der passiven Kupplung kann nun zurückgenommen werden und anschließend ein gewünschter Zielgang über die jeweiligen Gangsteller ungeregelt eingelegt werden. Eine Erkennung, ob der Zielgang eingelegt ist, kann wieder über eine berechnete Synchrondrehzahl überprüft werden. Um sicherzustellen, dass der Gang auch formschlüssig eingelegt ist, kann wieder ein gezieltes Schleppmoment an der passiven Kupplung gestellt werden. Die Wellendrehzahl stimmt dann mit der Synchrondrehzahl überein.

Eine Erkennung der Gangwahl also beispielsweise bei gegen eine Drehbewegung blockierter Abtriebswelle des Mehrkupplungsgetriebes 10 kann wie folgt zusammengefasst werden: Im Stand des Kraftfahrzeugs 100 kann die Synchrondrehzahl sämtlicher Gänge dem Wert "0" entsprechen. Dennoch kann mittels des erfindungsgemäßen Verfahrens erkannt werden, ob ein Gang eingelegt ist, oder nicht. Um eine ungewollte Fahrzeugbewegung des Kraftfahrzeugs 100 während der Erkennung der Gangwahl zu vermeiden, kann das Kraftfahrzeug 100 zunächst beispielsweise über eine Anforderung einer elektronischen Parkbremse oder einer Betriebsbremse des Kraftfahrzeugs 100 festgelegt werden. Um zu erkennen, ob auf dem betroffenen Teilgetriebe ein Gang eingelegt ist oder nicht kann wieder über die Beaufschlagen mit dem definierten Schleppmoment M_k2 an der jeweiligen Kupplung ein dauerhafter Kupplungsschlupf in Höhe der Antriebsdrehzahl Nan an der jeweiligen Kupplung eingestellt werden. Bleibt die Eingangswellendrehzahl konstant bei einem Wert "0", so ist ein Gang auf dem betroffenen Teilgetriebe eingelegt. Dreht die Welle wiederum mit der Antriebsdrehzahl Nan synchron, beziehungsweise ist der Kupplungsschlupf zwischen der Eingangswellendrehzahl und der Antriebsdrehzahl Nan kleiner als ein vorgegebener Schwellwert, so ist auf dem Teilgetriebe kein Gang eingelegt. Wenn ein Gang auf dem Teilgetriebe eingelegt ist, kann bei weiterhin gestellten Moment an der Fahrkupplung über die Gangsteller nacheinander ungeregelt versucht werden, einen Gang auszulegen. Sobald die Drehzahl der Eingangswelle auf die Antriebsdrehzahl hochschnellt, ist davon auszugehen, dass kein Gang mehr auf dem Teilgetriebe eingelegt ist. Das Moment an der Kupplung verhindert gleichzeitig ein ungewolltes Gangeinlegen auf einer gegenüberliegenden Gangstellerseite, da eine Synchronisierung gegen die drehende Eingangswelle mechanisch durch eine Sperrsynchronisierung verhindert werden kann. Im Anschluss daran kann nach vorherigem Öffnen der Fahrkupplung ungeregelt der gewünschte Gang eingelegt werden.

## Patentansprüche

1. Verfahren zum Betreiben eines Mehrkupplungsgetriebes (10) für ein Kraftfahrzeug (100), mit zumindest den folgenden Schritten:
a) Schließen einer ersten Kupplung (12) des Mehrkupplungsgetriebes (10), um ein Eingangsdrehmoment (M_k1) zwischen einer Antriebsmaschine des Kraftfahrzeugs (100) und zumindest einem ersten Teilgetriebe (20) des Mehrkupplungsgetriebes (10) zu übertragen;
b) Beaufschlagen eines, mit dem ersten Teilgetriebe (20) gekoppelten, zweiten Teilgetriebes (40) des Mehrkupplungsgetriebes (10) mit einem Schleppmoment (M_k2) durch eine zweite Kupplung (14) des Mehrkupplungsgetriebes (10);
c) Erfassen eines, von dem Schleppmoment (M_k2) abhängigen Kupplungsschlupfes der zweiten Kupplung (14);
**dadurch gekennzeichnet, dass** es folgenden Schritt beinhaltet:
d) Ermitteln einer aktuellen Gangwahl des Mehrkupplungsgetriebes (10) durch Bewerten des Kupplungsschlupfes.

2. Verfahren nach Anspruch 1,
**dadurch gekennzeichnet, dass**
das Schleppmoment (M_k2) beim Beaufschlagen des zweiten Teilgetriebes (40) in Schritt b) konstant gehalten wird.

3. Verfahren nach Anspruch 1 oder 2,
**dadurch gekennzeichnet, dass**
das Schleppmoment (M_k2) größer ist, als ein, einen Greifpunkt (70) der zweiten Kupplung (14) charakterisierendes Grenzmoment (72).

4. Verfahren nach einem der vorhergehenden Ansprüche,
**dadurch gekennzeichnet, dass**
in Schritt d) bei dem Ermitteln der aktuellen Gangwahl durch Bewerten des Kupplungsschlupfes ermittelt wird, ob in dem ersten Teilgetriebe (12) und in dem zweiten Teilgetriebe (14) jeweils ein Teilgetriebegang (22, 24, 26, 28, 42, 44, 46, 48) eingelegt ist.

5. Verfahren nach Anspruch 4,
**dadurch gekennzeichnet, dass**
ein Identifizieren zumindest eines, in dem ersten Teilgetriebe (12) oder in dem zweiten Teilgetriebe (14) eingelegten Teilgetriebegangs (22, 24, 26, 28, 42, 44, 46, 48) durch Heranziehen einer, den Teilgetriebegang (22, 24, 26, 28, 42, 44, 46, 48) charakterisierenden Synchrondrehzahl (43, 45) erfolgt, wenn der zu identifizierende Teilgetriebegang (22, 24, 26, 28, 42, 44, 46, 48) eingelegt ist.

6. Verfahren nach Anspruch 5,
**gekennzeichnet durch** den weiteren Schritt:
e) Änderung der aktuellen Gangwahl in Abhängigkeit von dem Identifizieren des eingelegten Teilgetriebegangs (22, 24, 26, 28, 42, 44, 46, 48), durch Einlegen eines, von dem eingelegten Teilgetriebegang (22, 24, 26, 28, 42, 44, 46, 48) verschiedenen, Teilgetriebeganges (22, 24, 26, 28, 42, 44, 46, 48).

7. Verfahren nach einem der vorhergehenden Ansprüche,
**dadurch gekennzeichnet, dass**
das Verfahren bei einer, gegen eine Drehbewegung blockierten Abtriebswelle des Mehrkupplungsgetriebes (10) durchgeführt wird.

8. Mehrkupplungsgetriebe (10) für ein Kraftfahrzeug (100), mit einem ersten Teilgetriebe (20), mit einer ersten Kupplung (12), welche schließbar ist, um ein Eingangsdrehmoment (M_k1) zwischen einer Antriebsmaschine des Kraftfahrzeugs (100) und zumindest dem ersten Teilgetriebe (20) des Mehrkupplungsgetriebes (10) zu übertragen, mit einem zweiten Teilgetriebe (40), welches mit dem ersten Teilgetriebe (20) gekoppelt ist, und mit einer zweiten Kupplung (14), zum Übertragen des Eingangsdrehmoments (M_k1) zwischen der Antriebsmaschine und dem zweiten Teilgetriebe (40),
**dadurch gekennzeichnet, dass**
eine Steuereinrichtung (16) vorgesehen ist, welche dazu ausgebildet ist zumindest die zweite Kupplung (14) anzusteuern, um mittels der zweiten Kupplung (14) zumindest das zweite Teilgetriebe (40) mit einem Schleppmoment (M_k2) zu beaufschlagen, während die erste Kupplung (12) geschlossen ist, wobei mittels der Steuereinrichtung (16) ein, von dem Schleppmoment (M_k2) abhängiger Kupplungsschlupf der zweiten Kupplung (14) erfassbar dadruch gekennzeichnet, dass eine aktuelle Gangwahl des Mehrkupplungsgetriebes (10) durch Bewerten des Kupplungsschlupfes ermittelbar ist.

9. Mehrkupplungsgetriebe (10) nach Anspruch 8,
**dadurch gekennzeichnet, dass**
das Mehrkupplungsgetriebe (10) ein Doppelkupplungsgetriebe ist.

10. Kraftfahrzeug (100) mit einem Mehrkupplungsgetriebe (10) nach einem der Ansprüche 8 oder 9.

## Claims

1. Method for operating a multi-clutch transmission (10) for a motor vehicle (100), having at least the following steps:
a) closing a first clutch (12) of the multi-clutch transmission (10) in order to transmit an input torque (M_k1) between a drive machine of the motor vehicle (100) and at least one first sub-transmission (20) of the multi-clutch transmission (10);
b) applying a drag moment (M_k2), on the part of a second transmission (14) of the multi-clutch transmission (10), to a second sub-transmission (40), coupled with the first sub-transmission (20), of the multi-clutch transmission (10);
c) determining a clutch slip, depending on the drag moment (M_k2), of the second transmission (14);
**characterised in that** it contains the following step:
d) detecting a current gear selection of the multi-clutch transmission (10) by evaluating the clutch slip.

2. Method according to claim 1,
**characterised in that**
the drag moment (M_k2) is kept constant when it is being applied to the second sub-transmission (40) in step b).

3. Method according to claim 1 or 2,
**characterised in that**
the drag moment (M_k2) is greater than a threshold torque (72) characterising a gripping point (70) of the second transmission (14).

4. Method according to any of the preceding claims,
**characterised in that**
in step d) when detecting the current gear selection by evaluating the clutch slip, it is detected whether in the first sub-transmission (12) and in the second sub-transmission (14) in each case a partial gear (22, 24, 26, 28, 42, 44, 46, 48) is selected.

5. Method according to claim 4,
**characterised in that**
an identification of at least one partial gear (22, 24, 26, 28, 42, 44, 46, 48) selected in the first sub-transmission (12) or in the second sub-transmission (14) is carried out by drawing on a synchronous rotational speed (43, 45) characterising the partial gear (22, 24, 26, 28, 42, 44, 46, 48), when the partial gear (22, 24, 26, 28, 42, 44, 46, 48) to be identified is selected.

6. Method according to claim 5,
**characterised by** the following step
e) changing the current gear selection depending on the identification of the selected partial gear (22, 24, 26, 28, 42, 44, 46, 48), by selecting a partial gear (22, 24, 26, 28, 42, 44, 46, 48) which is different from the selected partial gear (22, 24, 26, 28, 42, 44, 46, 48).

7. Method according to any of the preceding claims,
**characterised in that**
the method is carried out in the case of an output shaft, blocked against a rotational movement, of the multi-clutch transmission (10).

8. Multi-clutch transmission (10) for a motor vehicle (100), having a first sub-transmission (20), having a first clutch (12) which can be closed in order to transmit an input torque (M_k1) between a drive machine of the motor vehicle (100) and at least the first sub-transmission (20) of the multi-clutch transmission (10), having a second sub-transmission (40) which is coupled with the first sub-transmission (20), and having a second clutch (14) for transmitting the input torque (M_k1) between the drive machine and the second sub-transmission (40),
**characterised in that**
a control apparatus (16) is provided which is configured to control at least the second clutch (14), in order by means of the second clutch (14) to apply a drag moment (M_k2) at least to the second sub-transmission (40) while the first clutch (12) is closed, wherein by means of the control apparatus (16) a clutch slip of the second clutch (14) dependent on the drag moment (M_k2) able to be determined, **characterised in that** a current gear selection of the multi-clutch transmission (10) can be detected by evaluating the clutch slip.

9. Multi-clutch transmission (10) according to claim 8,
**characterised in that**
the multi-clutch transmission (10) is a dual-clutch transmission.

10. Motor vehicle (100) having a multi-clutch transmission (10) according to any of claims 8 or 9.

## Revendications

1. Procédé de fonctionnement d'une transmission à embrayages multiples (10) destinée à un véhicule automobile (100), comprenant au moins les étapes ci-dessous consistant à :
a) fermer un premier embrayage (12) de la transmission à embrayages multiples (10) afin de transmettre un couple d'entrée (M_k1) entre un moteur d'entrainement du véhicule automobile (100) et au moins une première section de transmission (20) de la transmission à embrayages multiples (10) ;
b) appliquer, grâce à un second embrayage (14) de la transmission à embrayages multiples (10), un couple de traînée (M_k2) à une seconde section de transmission (40), couplée à la première section de transmission (20), de la transmission à embrayages multiples (10) ;
c) détecter un patinage du second embrayage (14), dépendant du couple de traînée (M_k2) ;
**caractérisé en ce qu'**il comprend l'étape ci-dessous consistant à :
d) déterminer une sélection de rapport actuelle de la transmission à embrayages multiples (10) par évaluation du patinage de l'embrayage.

2. Procédé selon la revendication 1,
**caractérisé en ce que**
le couple de traînée (M_k2) est maintenu constant lors de son application à la seconde section de transmission (40) à l'étape b).

3. Procédé selon la revendication 1 ou 2,
**caractérisé en ce que**
le couple de traînée (M_k2) est supérieur à un couple limite (72) caractérisant un point de mise en prise (70) du second embrayage (14).

4. Procédé selon l'une quelconque des revendications précédentes,
**caractérisé en ce que**
à l'étape d), lors de la détermination de la sélection de rapport actuelle par évaluation du patinage de l'embrayage, il est déterminé si un rapport de section de transmission (22, 24, 26, 28, 42, 44, 46, 48) est enclenché respectivement dans la première section de transmission (12) et dans la seconde section de transmission (14).

5. Procédé selon la revendication 4,
**caractérisé en ce que**
une identification d'au moins un rapport de section de transmission (22, 24, 26, 28, 42, 44, 46, 48) enclenché dans la première section de transmission (12) ou dans la seconde section de transmission (14) a lieu par consultation d'une vitesse de synchronisme (43, 45) caractérisant le rapport de section de transmission (22, 24, 26, 28, 42, 44, 46, 48), lorsque le rapport de section de transmission (22, 24, 26, 28, 42, 44, 46, 48) à identifier est enclenché.

6. Procédé selon la revendication 5,
**caractérisé par** l'étape supplémentaire consistant à :
e) modifier la sélection de rapport actuelle en fonction de l'identification du rapport de section de transmission (22, 24, 26, 28, 42, 44, 46, 48) enclenché, grâce à l'enclenchement d'un rapport de section de transmission (22, 24, 26, 28, 42, 44, 46, 48) différent du rapport de section de transmission (22, 24, 26, 28, 42, 44, 46, 48) enclenché.

7. Procédé selon l'une quelconque des revendications précédentes,
**caractérisé en ce que**
le procédé est mis en œuvre par un arbre de sortie de la transmission à embrayages multiples (10) qui est bloqué à l'encontre d'un mouvement de rotation.

8. Transmission à embrayages multiples (10) destinée à un véhicule automobile (100), avec une première section de transmission (20), avec un premier embrayage (12) pouvant être fermé, afin de transmettre un couple d'entrée (M_k1) entre un moteur d'entrainement du véhicule automobile (100) et au moins la première section de transmission (20) de la transmission à embrayages multiples (10), avec une seconde section de transmission (40) couplée à la première section de transmission (20), et avec un second embrayage (14), afin de transmettre le couple d'entrée (M_k1) entre le moteur d'entrainement et la seconde section de transmission (40),
**caractérisée en ce que**
un dispositif de commande (16) est prévu, qui est conçu pour commander au moins le second embrayage (14) afin d'appliquer un couple de traînée (M_k2) à au moins la seconde section de transmission (40) au moyen du second embrayage (14), tandis que le premier embrayage (12) est fermé, dans laquelle un patinage du second embrayage (14), dépendant du couple de traînée (M_k2), peut détecté au moyen du dispositif de commande (16), **caractérisée en ce que**
une sélection de rapport actuelle de la transmission à embrayages multiples (10) peut être déterminée par évaluation du patinage de l'embrayage.

9. Transmission à embrayages multiples (10) selon la revendication 8,
**caractérisée en ce que**
la transmission à embrayages multiples (10) est une transmission à double embrayage.

10. Véhicule automobile (100) avec une transmission à embrayages multiples (10) selon la revendication 8 ou 9.
